# EUROPEAN PATENT APPLICATION

(11) **EP 4 592 666 A1**
(43) Date of publication of application: **30.07.2025**
(21) Application number: 23867437.8
(22) Date of filing: 18.09.2023
(51) Int. Cl.: G01N 3/14, G01M 13/00, B64F 5/60

(54) **TEST FRAME FOR STRENGTH OF WINGS UNDER STATIC LOADS**

(30) Priority: 19.09.2022 CN 202222471595 U
(71) Applicant: Autoflight (Kunshan) Co., Ltd., Suzhou, Jiangsu 215345 (CN)
(72) Inventor: TIAN, Yu, Suzhou, Jiangsu 215345 (CN); DAI, Chunxu, Suzhou, Jiangsu 215345 (CN)
(74) Representative: MERH-IP Matias Erny Reichl Hoffmann Patentanwälte PartG mbB
(86) International application number: PCT/CN2023/119322
(87) International publication number: WO 2024/061148

(57) **Abstract**

This invention relates to the field of test racks, particularly to a wing static load strength test rack, comprising: a test rack body; a plurality of fixed pulley systems are spaced apart on the test rack body; a plurality of weights, each of which is connected to one end of a rope of a fixed pulley system; a plurality of fixtures, each of which is connected to the rope of the fixed pulley system at one end away from the weight and spaced on the wing. The wing static load strength test rack provided by this invention has good safety, high integration, less space occupying, simple loading operation, and improves test efficiency.

## Description

### Technical Field

This invention relates to the field of test racks, particularly to a wing static load strength test rack.

### Background

The static load deformation of the wings of unmanned aerial vehicles needs to be tested before flight, existing test racks are mostly combination of load and fatigue test equipment, which is expensive and not suitable for low-cost small general-purpose fixed wing aircraft or large unmanned fixed wing aircraft. At the same time, most existing test racks use hydraulic jacks to apply force from the bottom of the wings and read the force values through sensors. Therefore, it is necessary to design a test rack specifically for the static load deformation of small wings.

### Specification

The purpose of this invention is to provide a wing static load strength test rack with good safety, high integration, less space occupation, simple loading operation, and improved test efficiency.

To achieve this goal, the present invention adopts the following technical solution.

The present invention provides a wing static load strength test rack, comprising:
a test rack body;
a plurality of fixed pulley systems, which are spaced apart on the test rack body;
a plurality of weights, each of which is connected to one end of a rope of a fixed pulley system;
a plurality of fixtures, each of which is connected to one end of the rope away from the fixed pulley system and is arranged spaced apart on a wing.

As a preferred option, the fixed pulley system comprises a first pulley, and the wing is connected to the first pulley that is located above the wing through the fixture.

As a preferred option, the fixed pulley system comprises a second pulley, and the wing is connected to the second pulley that is not located above the wing through the rope connected to the first pulley.

As a preferred option, the fixture comprises a connecting part and a clamping part, the connecting part is connected to the rope of the fixed pulley system, and the clamping part is used to clamp the tested drone wing.

As a preferred option, the connecting part is circular in shape.

As a preferred option, the clamping part comprises a first clamping part and a second clamping part.

As a preferred option, the first clamping part has a curved surface adapted to the drone wing, and the second clamping part has a groove for placing the drone wing, and the first clamping part and the second clamping part are screwed together by screws.

As a preferred option, the test rack body is enclosed by a plurality of steel bars that form a test space for placing an unmanned aerial vehicle.

As a preferred option, the wing static load strength test rack further comprises a ruler for detecting the deformation of the drone wing.

As a preferred option, the rope is a Kevlar rope.

The beneficial effects of this invention:
1. The wing static load strength test rack of this application has merits of good safety, high integration, less space occupying, easy to disassemble, simple loading method, test efficiency improvement and low-cost.
2. The wing static load strength test rack of this application is a simple experimental equipment designed for the test of the static load strength of fixed wings. It can easily simulate various overload coefficients, different loads on each section of the wing, and other working conditions. During the experiment, there is no need to disassemble the test equipment due to changes in test conditions, which improves safety and efficiency and reduces costs.

### Description

Figure 1 is an overall schematic diagram of the wing static load strength test rack provided by the present invention;
Figure 2 is a partial enlarged view of the wing static load strength test rack provided by the present invention;
Figure 3 is a partial enlarged view of the wing static load strength test rack provided by the present invention.

### Specific implementation method

The technical solution of the present invention will be further explained in conjunction with the accompanying drawings and implementation methods. It can be understood that the specific embodiments described here are only used to explain the present invention, and not to limit the present invention. Additionally, it should be noted that for ease of description, only the parts related to the present invention are shown in the accompanying drawings, not all of them.

In the description of this invention, it should be noted that unless otherwise specified and limited, the terms "installation", "connection", and "connection" should be broadly understood, for example, they can be fixed connections or detachable connections. It can be a mechanical connection or an electrical connection. It can be directly connected, indirectly connected through an intermediate medium, or connected internally between two components. For ordinary technical personnel in this field, the specific meanings of the above terms in this invention can be understood in specific situations.

In this invention, unless otherwise specified and limited, the first feature above or below the second feature may include direct contact between the first and second features, or may include contact between the first and second features through another feature between them instead of direct contact. Moreover, the first feature being 'above', 'above', and 'above' the second feature includes the first feature being directly above and diagonally above the second feature, or simply indicating that the first feature is horizontally higher than the second feature. The first feature being "below", "below", and "below" include the first feature being directly below and diagonally below the second feature, or simply indicating that the first feature has a lower horizontal height than the second feature.

In the description of this embodiment, the terms "up", "down", "right", etc. are based on the orientation or position relationship shown in the accompanying drawings, only for the convenience of description and simplification of operation, and do not indicate or imply that the device or component referred to must have a specific orientation, be constructed and operated in a specific orientation, and therefore cannot be understood as a limitation of the present invention. In addition, the terms "first" and "second" are only used to distinguish in description and do not have any special meaning.

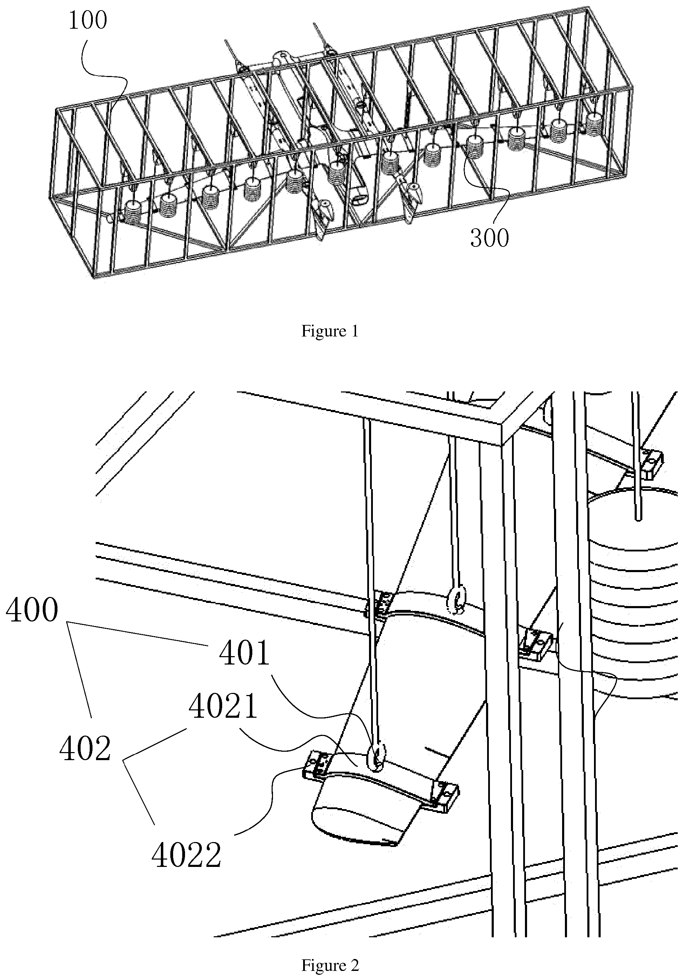

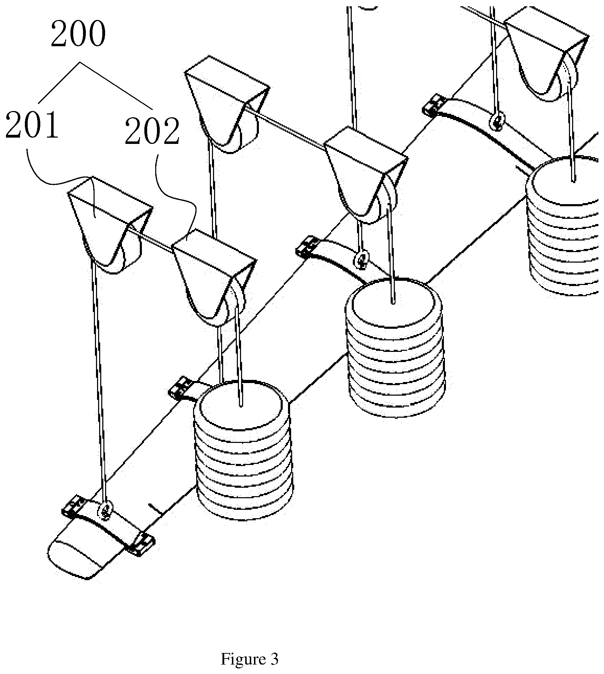

As shown in Figures 1-3, this embodiment provides a wing static load strength test rack, which specifically includes a test rack body 100, also known as a gantry rack. The test rack body 100 is enclosed by a plurality of rectangular steel bars to form a test space for placing the unmanned aerial vehicle to be tested. This embodiment also provides a plurality of fixed pulley systems 200, spaced apart on the test rack body 100, are used to change the direction of force. This embodiment also provides a plurality of weights 300 that are connected to one end of the rope of a fixed pulley systems 200. This embodiment also provides a plurality of fixtures 400 that are connected to the rope of the fixed pulley systems 200 at one end away from the weight 300 and spaced on the wing. The specific connection rope used is Kevlar rope, which has good tensile performance and can bear large loads.

Specifically, the fixed pulley system 200 provided in this application includes a first pulley 201 and a second pulley 202. The wing is connected to the first pulley 201 located above the wing through a fixture 400. In addition, the fixed pulley system includes a second pulley 202, and the wing is connected to the second pulley 202 not located above the wing through a rope connected to the first pulley 201.

Furthermore, the fixture 400 includes a connecting part 401 and a clamping part 402. The connecting part 401 is connected to the rope of the fixed pulley systems 200, and the connecting part 401 is circular in shape, which can be a lifting ring for easy connection with the rope. The clamping part 402 is used to clamp the wing of the drone to be tested. In order to improve the structural rigidity, the connecting part 401 and the clamping part 402 adopt an integrated molding design.

Specifically, the clamping part 402 consists of two parts, including a first clamping part 4021 and a second clamping part 4022. The first clamping part 4021 has a certain curvature, which is a curved surface suitable for the drone wing, while the second clamping part 4022 has a groove for placing the drone wing. The first clamping part 4021 and the second clamping part 4022 are in contact with each other. In order to connect them more reliably, the first clamping part 4021 and the second clamping part 4022 are screwed together with screws.

It is worth noting that the wing static load strength test rack provided by the present invention also includes a ruler for detecting the deformation of the drone wing.

When waiting for test, place the test drone's wing on the gantry, and the fixture 400 holds the wing of the test drone in a predetermined form. The lifting ring above the fixture 400 can be connected to a tensile Kevlar rope. The rope can change the direction of force through the fixed pulley systems 200, and at the same time, the weight 300 can be kept away from above the wing to prevent the weight 300 from accidentally falling and injuring the drone. The other end of the rope is connected to weight 300, which can accurately control the load weight. Due to multiple clamping positions, weight 300 with different weights can be loaded separately, achieving flexible loading. Segmented loading is used to simulate the experimental effects of different loads on each section of the wing, and different overload coefficients can also be easily simulated.

Obviously, the above embodiments of the present invention are only for the purpose of clearly illustrating the examples provided by the present invention, and are not intended to limit the embodiments of the present invention. For ordinary technical personnel in the relevant field, other forms of changes or modifications can be made based on the above explanation. It is not necessary and impossible to exhaustively list all implementation methods here. Any modifications, equivalent substitutions, and improvements made within the spirit and principles of this invention shall be included in the scope of protection of the claims of this invention.

## Claims

1. A wing static load strength test rack, comprising:
a test rack body;
a plurality of fixed pulley systems, which are spaced apart on the test rack body;
a plurality of weights, each of which is connected to one end of a rope of a fixed pulley system;
a plurality of fixtures, each of which is connected to one end of the rope away from the fixed pulley system and is arranged spaced apart on a wing.

2. The wing static load strength test rack according to claim 1, **characterized in that** the fixed pulley system comprises a first pulley, and the wing is connected to the first pulley that is located above the wing through the fixture.

3. The wing static load strength test rack according to claim 2, **characterized in that** the fixed pulley system comprises a second pulley, and the wing is connected to the second pulley that is not located above the wing through the rope connected to the first pulley.

4. The wing static load strength test rack according to claim 1, **characterized in that** the fixture comprises a connecting part and a clamping part, the connecting part is connected to the rope of the fixed pulley system, and the clamping part is used to clamp the tested drone wing.

5. The wing static load strength test rack according to claim 4, **characterized in that** the connecting part is circular in shape.

6. The wing static load strength test rack according to claim 4, **characterized in that** the clamping part comprises a first clamping part and a second clamping part.

7. The wing static load strength test rack according to claim 6, **characterized in that** the first clamping part has a curved surface adapted to the drone wing, and the second clamping part has a groove for placing the drone wing, and the first clamping part and the second clamping part are screwed together by screws.

8. The wing static load strength test rack according to claim 1, **characterized in that** the test rack body is enclosed by a plurality of steel bars that form a test space for placing an unmanned aerial vehicle.

9. The wing static load strength test rack according to claim 1, **characterized in that** the wing static load strength test rack further comprises a ruler for detecting the deformation of the drone wing.

10. The wing static load strength test rack according to claim 1, **characterized in that** the rope is a Kevlar rope.
